# EUROPÄISCHE PATENTSCHRIFT

(11) **EP 0 224 629 B1**
(45) Veröffentlichungstag und Bekanntmachung des Hinweises auf die Patenterteilung: **16.06.1993**
(21) Anmeldenummer: 85890301.6
(22) Anmeldetag: 04.12.1985
(51) Int. Cl.: C08G 63/18, C08G 63/79

(54) **Verfahren zur Herstellung eines niedermolekularen Polyesters sowie Polyester erhältlich nach diesem Verfahren**
Process for the preparation of a low molecular weight polyester and polyester obtainable by this process
Procédé de préparation de polyester à bas poids moléculaire et le polyester obtenu par ce procédé

(43) Veröffentlichungstag der Anmeldung: 10.06.1987
(73) Patentinhaber: ISOVOLTA Österreichische Isolierstoffwerke Aktiengesellschaft, 2355 Wiener Neudorf (AT)
(72) Erfinder: Fialla, Peter, Dipl.-Ing., A-2344 Maria Enzersdorf (AT)
(74) Vertreter: Stampfer, Heinz

(56) Entgegenhaltungen:
- EP-A- 0 041 496
- EP-A- 0 050 821
- DE-A- 2 442 541
- FR-A- 2 229 730
- FR-A- 2 439 800
- V.V. KORSHAK et al.: "Polyesters", Kapitel IX: "Polyarylates", Seiten 449-472, 1965, Pergamon Press, Oxford, GB.

## Beschreibung

Die Erfindung betrifft ein Verfahren zur Polykondensation von Diphenolen und Halogeniden, insbesondere Chloriden, von Dicarbonsäuren nach dem Zweiphasengrenzflächenverfahren, wobei aus der wäßrigen Phase, bestehend aus dem Diphenol, Alkalihydroxid zur Bildung des Diphenolates in stöchiometrischem Verhältnis oder in geringem Überschuß sowie einem Phasentransferkatalysator wie Benzyltriäthylammoniumchlorid, Tetrabutylammoniumjodid oder Kronenäther in Wasser oder gegebenenfalls in einem Gemisch aus Wasser und einem organischen Lösungsmittel als Lösungsvermittler, mit der organisch-flüssigen Phase, bestehend aus einer Lösung des Säurehalogenids in einem organischen Lösungsmittel, eine feine Dispersion hergestellt wird, wobei das mit Hilfe des Phasentransferkatalysators in die organisch-flüssige Phase übergeführte Diphenolat mit dem Säurehalogenid eine Polykondensationsreaktion eingeht, wonach der erzeugte Polyester aus der organisch-flüssigen Phase gewonnen wird, zur Herstellung eines niedermolekularen Polyesters, bestehend im wesentlichen aus Kettengliedern der Formel

(̵O-X-O-Y)̵

der in diesen Kettengliedern als Glied X im wesentlichen die Strukturen 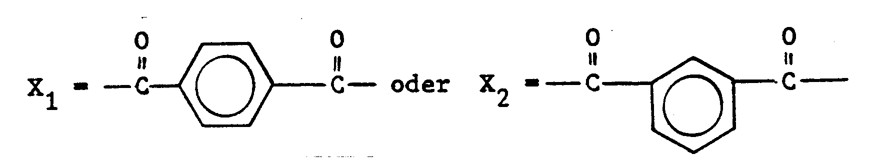
und als Glied Y im wesentlichen die Struktur 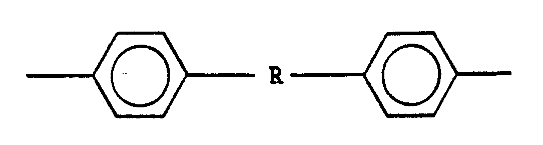
aufweist, wobei R ein bifunktioneller, mindestens einen aromatischen oder zykloaliphatischen Ring enthaltender Kohlenwasserstoffrest ist. Sie betrifft ferner einen nach diesem Verfahren erhältlichen niedermolekularen Polyester.

Ein Verfahren der obengenannten Art ist z.B: aus der FR-A-2,229730 bekannt. Dort werden insbesondere Zusammensetzungen aus einem aromatischen Polyester (a) als Hauptbestandteil und Polyethylenoxybenzoat (b) beschrieben. Der Polyester (a), der in einem Diphenol wie z.B. Bis-(4-hydroxyphenyl)-cyclohexylmethan und einem Gemisch aus Iso- und Terephthalsäure hergestellt wird, weist eine inhärente Viskosität von 0,3 bis 1,5 dl/g auf. Bei diesem bekannten Verfahren wird - wie bei Zweiphasenrenzflächenverfahren üblich - in die vorgelegte wäßrige Diphenolatlösung die organisch-flüssige Phase, nämlich eine Lösung der Säurechloride in Methylenchlorid unter Rühren zur Bildung der Disperson zugeführt.

Nach diesem Verfahren hergestellte niedermolekulare Polyester, also z.B. Polyester mit einer inhärenten Viskosität von weniger als 0,5 dl/g, die z.B. als Vernetzer zur Herstellung von Kunstharzen dienen können, haben aber im Hinblick auf diese Verwendung einige Nachteile. Zunächst weisen sie eine im Durchschnitt noch zu hohe Viskosität auf, ferner haben sie keine definierten Endgruppen, insbesondere Carboxylgruppen und drittens ist ihre Molekulargewichtsverteilung nicht eng genug, um vernetzte Produkte einer ganz bestimmten Struktur herstellen zu können.

Hier will die Erfindung Abhilfe schaffen. Das erfindungsgemäße Verfahren, wie es in den Ansprüchen 1 - 7 gekennzeichnet ist, löst die Aufgabe, ein Verfahren von niedermolekularen Polyestern mit einer im allgemeinen noch niedrigeren Viskosität, mit Carboxylendgruppen und einer engeren Molekulargewichtsverteilung anzugeben. Dabei ist das Verfahren gemäß Anspruch 1 dadurch gekennzeichnet, daß der erzeugte Polyester eine inhärente Viskosität von 0,08 bis 0,35 dl/g, vorzugsweise von 0,1 bis 0,25 dl/g - gemessen bei 30°C an 100 ml Lösung von 0,5 g Polyester in einem Lösungsmittel, bestehend zu 60 Gew.-% aus Phenol und zu 40 Gew.-% aus 1,1,2,2-Tetrachloräthan - aufweist und daß ab Beginn der Polykondensation während des größten Teils des Reaktionsablaufes die Dispersion das in der wäßrigen Phase enthaltene Diphenolat - mit Bezug auf das in der organischen Phase enthaltene Säurehalogenid - in Unterschuß enthält.

Die Erfindung betrifft ferner nach dem erfindungsgemäßen Verfahren erhältliche niedermolekulare Polyester, wie sie in den Ansprüchen 8 und 9 gekennzeichnet sind, nämlich hergestellt auf Basis der Diphenole 1,1-Bis(4-hydroxyphenyl)-1-phenyläthan und 9,9-Bis(4-hydroxyphenyl)-fluoren.

Zwar sind Polyester dieser Art aus der EP-B1-64971 bzw. der EP-B1-64972 bekannt, doch handelt es sich hier um hochmolekulare Produkte mit einer inhärenten Viskosität von mehr als 1,0 dl/g.

Die Erfindung wird nachstehend anhand einiger Ausführungswege näher erläutert.

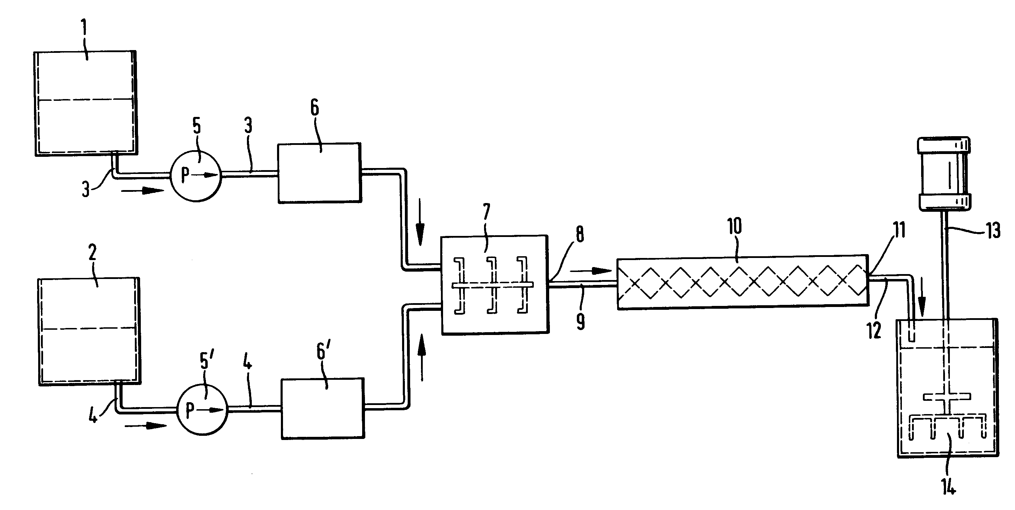

Die Zeichnung zeigt das Fließschema einer Einrichtung zur Durchführung einer bevorzugten Variante des erfindungsgemäßen Verfahrens.

Behälter 1 bzw. 2 sind über Leitungen 3, 4, in denen jeweils eine Dosierpumpe 5,5' sowie ein Durchflußmeßgerät 6,6' eingeschaltet sind, mit dem Eingang einer Dispergiereinrichtung 7 verbunden, die mit ihrem Ausgang 8 über die Leitung 9 an den Eingang eines statischen Mixers 10 angeschlossen ist. Vom Ausgang 11 des statischen Mixers 10 führt eine Leitung 12 zu einem mit einem Rührwerk 13 versehenen Gefäß 14.

Das erfindungsgemäße Polykondensationsverfahrens zur Herstellung niedermolekularer Polyester wird nachstehend anhand einiger Beispiele näher erläutert.

### Beispiel 1:

Zur Herstellung der wässrigen Phase werden in 400 ml Wasser zunächst 8.8 g (0,22 Mol) NaOH und danach 29 g (0,1 Mol) 1,1-Bis(4-hydroxyphenyl)-1-phenyläthan unter Erwärmen gelöst und die abgekühlte Lösung mit 70 ml Isopropanol versetzt. Dieser Lösung werden dann als Phasentransferkatalysator - in wenig Wasser gelöst - 1,14 g (0,005 Mol) Benzyltriäthylammoniumchlorid zugegeben.

Die organisch-flüssige Phase, bestehend aus einer Lösung von 13,2 g (0,065 Mol)iso-Phthaloylchlorid und 13,2 g (0,065 Mol)tere-Phthaloylchlorid in 250 ml wasserfreiem 1,2-Dichloräthan wird unter Stickstoffatmosphäre in einem 2,5 l Kolben, der mit einem als Dispergator wirkenden hochtourigen Rührwerk versehen ist, vorgelegt und in einem Kühlbad zunächst auf 17^{o}C gekühlt.

Nach Einschalten des Rührwerkes wird der vorgelegten organisch-flüssigen Phase nun während einer Dauer von 6 min die wässrige Phase zufließen gelassen, wobei - wegen der hohen Rührintensität - die zufließenden Mengen der wässrigen Phase jeweils unverzüglich in der organisch-flüssigen Phase dispergiert werden. Während dieser Zugabe der wässrigen Phase steigt die Temperatur in der das Reaktionsgemisch bildenden Dispersion von 17^{o}C auf etwa 26^{o}C an. Nach Beendigung der Zugabe wird zwecks Aufrechterhaltung der Dispersion während einer Nachreaktionszeit von weiteren 6 min noch weitergerührt.

Nach Abschalten des Rührwerkes trennen sich die Phasen in kurzer Zeit durch Absitzen, wonach die schwach alkalische wässrige Phase verworfen wird. Die den gebildeten niedermolekularen Polyester enthaltende organisch-flüssige Phase wird hierauf dreimal mit Wasser gewaschen und der Polyester schließlich durch Zugabe von Isopropanol und unter Rühren in feinkörniger Form gefällt. Das gefällte Material wird abgenutscht und bei 80^{o}C im Vakuum-Trockenschrank getrocknet. Man erhält 40 g eines Polyesters (das sind 95% Ausbeute) mit einer Inhärenten Viskosität IV = 0,13 dl/g und einem Schmelzbereich zwischen 200 und 220^{o}C.

Die Messung der Inhärenten Viskosität IV = ηᵢₙₕ erfolgt dabei bei 30^{o}C an 100 ml Lösung von 0,5 g Polyester in einem zu 60 Gew.% aus Phenol und zu 40 Gew.% aus 1,1,2,2-Tetrachloräthan bestehenden Lösungsmittel.

### Beispiel 2:

Das Verfahren gemäß Beispiel 1 wurde wiederholt, mit dem Unterschied, daß als Diphenol 35 g (0,1 Mol) 9,9-Bis(4-hydroxyphenyl)-fluoren und wegen dessen schlechteren Löslichkeit 140 ml Isopropanol als Lösungsvermittler eingesetzt wurden.

Man erhielt 47 g (das sind 97,9% Ausbeute) eines niedermolekularen Polyesters mit einer Inhärenten Viskosität IV = 0,15 dl/g und einem Schmelzbereich zwischen 200 und 220^{o}C.

### Beispiel 3:

Das Verfahren gemäß Beispiel 2 wurde wiederholt, mit dem Unterschied, daß als Diphenol 23 g (0,1 Mol) 2,2-Bis(4-hydroxyphenyl)-propan eingesetzt wurden.

Man erhielt 34 g (das sind 94,7% Ausbeute) eines niedermolekularen Polyesters mit einer Inhärenten Viskosität IV = 0,14 dl/g und einem Schmelzbereich zwischen 140 und 160^{o}C.

### Beispiel 4:

Man bildet, analog wie in Beispiel 1 beschrieben, als wässrige Phase eine Lösung A aus
232,4 g (0,8 Mol) 1,1-Bis(4-hydroxyphenyl)-1-phenyläthan,
70,4 g (1,76 Mol) NaOH,
9,60 l Wasser,
1,06 l Isopropanol und
4,8 g (0,021 Mol) Benzyltriäthylammoniumchlorid
und als organisch flüssige Phase eine Lösung B aus
162,4 g (0,8 Mol) einer 50/50 Mischung iso/tere-Phthaloylchlorid
4,4 l 1,2-Dichloräthan sowie
16,2 g (0,08 Mol) iso/tere Phthaloylchlorid
als Überschuß des Säurechlorids in Höhe von 10 Mol %.

Zur kontinuierlichen Herstellung des niedermolekularen Polyesters mittels der in der Zeichnung dargestellten Einrichtung werden die auf etwa 17^{o}C gekühlten Lösungen A und B in die Behälter 1 bzw. 2 eingefüllt. Mittels der Dosierpumpen 5,5' werden nun Lösung A als wässrige Phase in einer Menge von 0,344 l/min und Lösung B als organisch-flüssige Phase in einer Menge von 0,265 l/min gemeinsam kontinuierlich in die Dispergiereinrichtung 7 eingespeist, in der die beiden Phasen unter Temperaturerhöhung auf ca. 26^{o}C in eine feine Dispersion übergeführt werden. Diese Dispersion passiert dann den statischen Mixer 10, in welchem während des Ablaufes der Polykondensation der dispergierte Zustand aufrechterhalen wird, und wird schließlich in das Gefäß 14, in dem Wasser vorgelegt ist, unter starkem Rühren eingeleitet.

Nach Verbrauch der vorbereiteten Lösungen A und B werden im Gefäß 14 die beiden Phasen durch Absitzen getrennt und die schwach alkalische wässrige Phase verworfen. Die Fällung und Aufarbeitung des in der organisch-flüssigen Phase gebildeten niedermolekularen Polyesters erfolgt dann wie in Beispiel 1 beschrieben. Der erhaltene Polyester hat eine IV = 0,18 dl/g und einen Schmelzbereich von 210-225^{o}C.

In Abänderung dieses Verfahrensbeispieles wurde nun der Überschuß an Säurechlorid durch Veränderung der relativen Durchflußmengen von Lösung A zu Lösung B variiert. Dabei stellte sich heraus, daß mit steigendem Säurechloridüberschuß die Inhärente Viskosität abnimmt und umgekehrt. Es wurde ferner gefunden, daß im Bereich der Inhärenten Viskosität (IV) von kleiner als etwa 0,6 - 0,7 dl/g die Schmelztemperatur des Polyesters mit steigenden IV-Werten weitgehend linear ansteigt. Durch entsprechende Einstellung des IV-Wertes kann also z.B. der für eine bestimmte Weiterverwendung des niedermolekularen Polyesters optimale Wert der Schmelztemperatur erzielt werden.

Ganz allgemein kann bei dem erfindungsgemäßen Verfahren eine Beeinflussung der Inhärenten Viskosität noch durch Variation der Temperatur, der Zugabegeschwindigkeit der wässrigen Phase, der Konzentrationen des Lösungsvermittlers und/oder des Phasentransferkatalysators und gegebenenfalls durch den Einsatz eines Phasentransferkatalysators zusätzlich auch in der organisch-flüssigen Phase erreicht werden.

Die erfindungsgemäßen niedermolekularen Polyester können vorteilhart als Ausgangsmaterial von Polymerisationsverfahren, z.B. bei einer gemeinsamen Polykondensation mit Aminen, Amiden, Imiden oder dgl. aber auch durch Polyaddition z.B. mit Epoxyden, Norbornenen etc. eingesetzt werden.

## Patentansprüche

1. Verfahren zur Polykondensation von Diphenolen und Halogeniden, insbesondere Chloriden, von Dicarbonsäuren nach dem Zweiphasengrenzflächenverfahren, wobei aus der wäßrigen Phase, bestehend aus dem Diphenol, Alkalihydroxid zur Bildung des Diphenolates in stöchiometrischem Verhältnis oder in geringem Überschuß sowie einem Phasentransferkatalysator wie Benzyltriäthylammoniumchlorid, Tetrabutylammoniumjodid oder Kronenäther in Wasser oder gegebenenfalls in einem Gemisch aus Wasser und einem organischen Lösungsmittel als Lösungsvermittler, mit der organischflüssigen Phase, bestehend aus einer Lösung des Säurehalogenids in einem organischen Lösungsmittel, eine feine Dispersion hergestellt wird, wobei das mit Hilfe des Phasentransferkatalysators in die organisch-flüssige Phase übergeführte Diphenolat mit dem Säurehalogenid eine Polykondensationsreaktion eingeht, wonach der erzeugte Polyester aus der organisch-flüssigen Phase gewonnen wird, zur Herstellung eines niedermolekularen Polyesters, bestehend im wesentlichen aus Kettengliedern der Formel
(̵O-X-O-Y)̵
der in diesen Kettengliedern als Glied X im wesentlichen die Strukturen 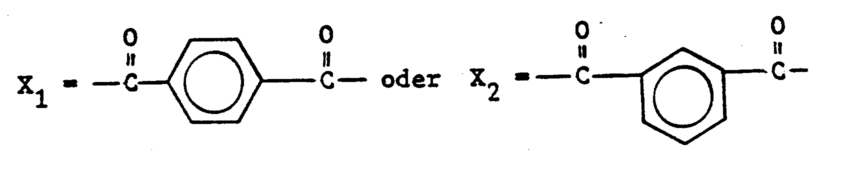 und als Glied Y im wesentlichen die Struktur 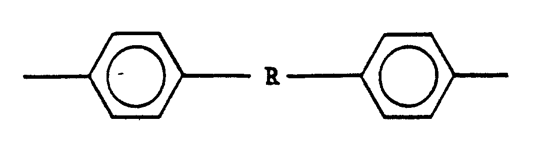 aufweist, wobei R ein bifunktioneller, mindestens einen aromatischen oder zykloaliphatischen Ring enthaltender Kohlenwasserstoffrest ist, dadurch gekennzeichnet, daß der erzeugte Polyester eine inhärente Viskosität von 0,08 bis 0,35 dl/g, vorzugsweise von 0,1 bis 0,25 dl/g - gemessen bei 30°C an 100 ml Lösung von 0,5 g Polyester in einem Lösungsmittel, bestehend zu 60 Gew.% aus Phenol und zu 40 Gew.% aus 1,1,2,2-Tetrachloräthan - aufweist und, daß ab Beginn der Polykondensation während des größten Teiles des Reaktionsablaufes die Dispersion das in der wässrigen Phase enthaltene Diphenolat - mit Bezug auf das in der organischen Phase enthaltene Säurehalegonid - in Unterschuß enthält.

2. Verfahren nach Anspruch 1, dadurch gekennzeichnet, daß neben der wässrigen Phase auch die eingesetzte organisch-flüssige Phase einen Phasentransferkatalysator enthält.

3. Verfahren nach Anspruch 1 oder 2, dadurch gekennzeichnet, daß man der in einem Behälter vorgelegten organisch-flüssigen Phase unter ständigem intensivem Rühren die wässrige Phase, die - mit Bezug auf das in der organisch-flüssigen Phase eingesetzte Säurehalogenid - das einzusetzende Diphenol in stöchiometrischem Verhältnis oder in Unterschuß enthält, kontinuierlich oder nacheinander portionsweise zugibt, wonach man gegebenenfalls die Dispersion aus wässriger und organisch-flüssiger Phase zumindest bis Zur Beendigung der Polykondensation durch weiteres Rühren aufrechterhält.

4. Verfahren nach Anspruch 3, dadurch gekennzeichnet, daß die Zugabe der wässrigen Phase zumindest so langsam erfolgt, daß die zugegebenen Mengen der wässrigen Phase jeweils unverzüglich in der organisch-flüssigen Phase dispergiert werden.

5. Verfahren nach Anspruch 3 oder 4, dadurch gekennzeichnet, daß man der organisch-flüssigen Phase die wässrige Phase während einer Zeitspanne von 1 bis 15 min Dauer zuführt.

6. Verfahren nach einem der Ansprüche 1 oder 2, dadurch gekennzeichnet, daß die organisch-flüssige Phase und die wässrige Phase, die - mit Bezug auf das eingesetzte Säurehalegonid - das Diphenolat in Unterschuß enthält, kontinuierlich gemengt und dieses Gemenge nacheinander ein oder mehrere Dispergiereinrichtungen und/oder statische Mixer durchläuft.

7. Verfahren nach einem der Ansprüche 1 oder 2, dadurch gekennzeichnet, daß die organisch-flüssige Phase dem Eingang eines in Form einer Rohrleitung aufgebauten Reaktors zugeführt wird, in dem in Förderrichtung nacheinander ein oder mehrere Disergiereinrichtungen und/oder statische Mixer eingeschaltet sind, und daß die wässrige Phase dem Reaktor an in Förderrichtung nacheinander angeordneten Einspeisestellen in mehreren Teilströmen jeweils kontinuierlich zugeführt wird.

8. Niedermolekularer Polyester erhältlich nach einem der Verfahren gemäß einem der Ansprüche 1 - 7, dadurch gekennzeichnet, daß im Glied Y der bifunktionelle Rest R die Struktur 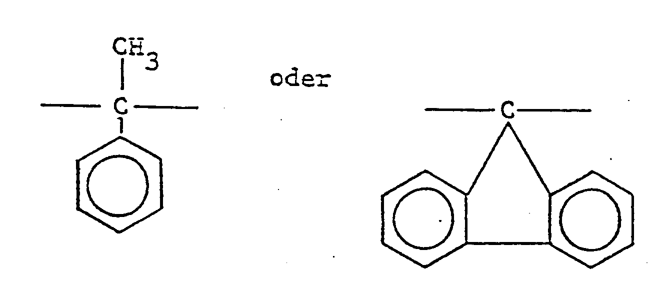 aufweist,

9. Niedermolekularer Polyester nach Anspruch 8, dadurch gekennzeichnet, daß zwischen 30 und 70% der Kettenglieder als Glied X die Struktur X₁ und zwischen 70 und 30% der Kettenglieder als Glied X die Struktur X₂ haben.

## Claims

1. A method for the polycondensation of diphenols and halides, in particular chlorides, of dicarboxylic acids according to the two-phase interface process, in which a fine dispertion is produced from the aqueous phase, consisting of the diphenol, alkali hydroxide for forming the diphenolate in a stoichiometric ratio or in a slight excess and also a phase transfar catalyst such as benzyl triethylammonium chloride, tetrabutylammonium iodide or crown ethers in water or optionally in a mixture of water and an organic solvent as solubiliser, with the organic-liquid phase, consisting of a solution of the acid halide in an organic solvent, the diphenolate which has been converted with the aid of the phase transfer catalyst into the organic-liquid phase undergoing a polycondensation reaction with the acid halide, whereafter the polyester produced is obtained from the organic-liquid phase, for the preparation of a lower molecular polyester, consisting essentially of chain links of the formula
(̵O-X-O-Y)̵
which in these chain links has essentially the structures 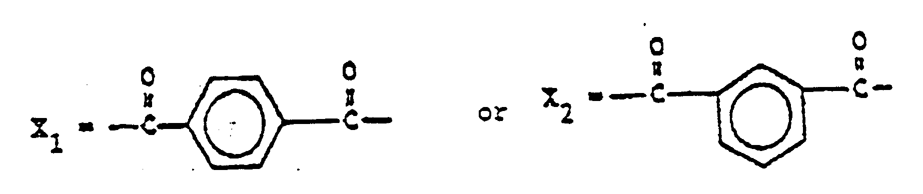 as link X and essentially the structure 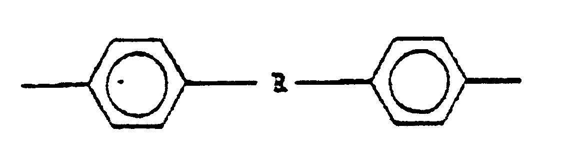 as link Y, R being a bifunctional hydrocarbon radical containing at least one aromatic or cycloaliphatic ring, characterised in that the polyester produced has an inherent viscosity of 0.08 to 0.35 dl/g, preferably of 0.1 to 0.25 dl/g - measured at 30°C on 100 ml solution of 0.5 g polyester in a solvent, consisting of 60% by weight phenol and 40% by weight 1,1,2,2-tetrachloroethane - and that from the beginning of the polycondensation during the major part of the course of the reaction the dispersion contains the diphenolate contained in the aqueous phase - relative to the acid phase contained in the organic phase - in a stoichiometrically inferior ratio.

2. A method according to Claim 1, characterised in that in addition to the aqueous phase the organic-liquid phase used also contains a phase transfer catalyst.

3. A method according to Claim 1 or 2, characterised in that the aqueous phase which - relative to the acid halide contained in the organic-liquid phase - contains the diphenol to be used in a stoichiometric ratio or in a stoichiometricall inferior ratio is added continuously or in portions one after the other to the organic-liquid phase placed in a container with constant intensive stirring, whereafter optionally the dispersion of aqueous and organic-liquid phase is maintained by further stirring at least until the polycondensation has ended.

4. A method according to Claim 3, characterised in that the addition of the aqueous phase takes place at least so slowly that the quantities of the aqueous phase added are dispersed immediately each time in the organic-liquid phase.

5. A method according to Claim 3 or 4, characterised in that the aqueous phase is fed to the organic-liquid phase during a period of 1 to 15 minutes' duration.

6. A method according to one of Claims 1 or 2, characterised in that the organic-liquid phase and the aqueous phase which - relative to the acid halide used - contains the diphenolate in a stoichiometrically inferior ratio are mixed continuously and this mixture passes through one or more dispersing apparatus and/or static mixers one after the other.

7. A method according to one of Claims 1 or 2, characterised in that the organic-liquid phase is fed to the entrance of a reactor constructed in the form of piping, in which one or more dispersing devices and/or static mixers are located one after the other in the direction of conveyance, and that the aqueous phase is fed continuously to the reactor in a plurality of sub-streams at feed points located one after the other in the direction of conveyance.

8. A low-molecular polyester, obtainable according to a method according to one of Claims 1 - 7, characterised in that in link Y the bifunctional radical R has the structure

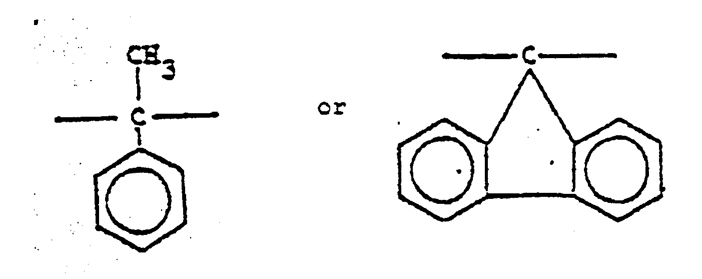

9. A low-molecular polyester according to Claim 8, characterised in that between 30 and 70% of the chain links have the structure X₁ as link X and between 70 and 30% of the chain links have the structure X₂ as link X.

## Revendications

1. Procédé de polycondensation de diphénols et d'halogénures d'acides dicarboxyliques, en particulier de chlorures d'acides dicarboxyliques, conduisant à l'obtention d'une fine dispersion formée à partir d'une phase aqueuse formée de diphénol, d'hydroxyde alcalin pour l'obtention de diphénolate en proportions stoechiométriques ou en un léger excès, ainsi que d'un catalyseur de transfert de phase tel le chlorure de benzyltriéthylammonium, l'iodure de tétrabutylammonium ou un éther-couronne, en mélange avec de l'eau ou, le cas échéant, dans un mélange d'eau et d'un solvant organique agissant en tant qu'agent de solubilisation, et à partir d'une phase organique liquide consistant en une solution de l'halogénure d'acide dans un solvent organique, procédé dans lequel le diphénolate, passé dans la phase organique par action du catalyseur de transfert de phase, réagit avec l'halogénure d'acide, pour donner lieu à une réaction de polycondensation, et dans lequel le polyester obtenu est extrait de la phase organique liquide, pour conduire à l'obtention d'un polyester de bas poids moléculaire, constitué essentiellement des motifs monomères de formule:
(̵O-X-O-Y)̵
dans laquelle:
le groupe X a sensiblement pour formule: 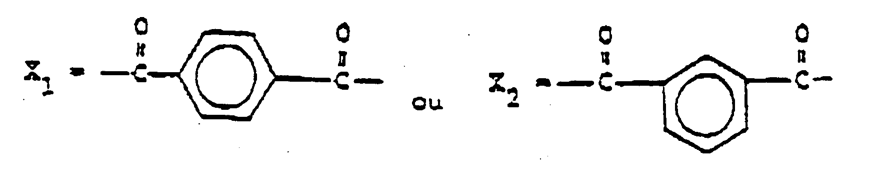 et
le groupe Y a sensiblement pour formule: 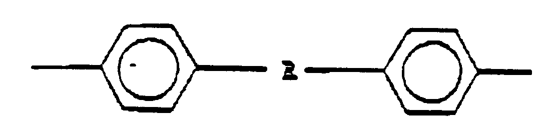 dans lesquelles formules R représente un radical hydrocarboné bifonctionnel contenant au moins un cycle aromatique ou cycloaliphatique,
ce procédé étant caractérisé en ce que la polyester obtenu présente une viscosité inhérente de 0,08 à 0,35 dl/g, de préférence de 0,1 à 0,25 dl/g, mesurée à 30°C dans 100 ml de solution contenant 0,5 g de polyester dans un solvant consistant pour 60% en poids de phénol et pour 40% en poids de 1,1,2,2,-tétrachloroéthane, et en ce que, du début de la polycondensation et pendant la partie essentielle de la réaction, le diphénolate contenu dans la phase aqueuse de la dispersion -par rapport à l'halogénure d'acide contenu dans la phase organique- est présente en une quantité inférieure à celle correspondant à la stoechiométrie.

2. Procédé de polycondensation selon la revendication 1, caractérisé en ce que, outre la phase aqueuse, la phase organique utilisée contient aussi un catalyseur de transfert de phase.

3. Procédé de polycondensation selon la revendication 1 ou 2, caractérisé en ce qu'à la phase organique liquide placée dans un récipient et maintenue sous agitation constante intensive, on ajoute la phase aqueuse qui contient le diphénol destiné à réagir -par rapport à l'halogénure d'acide utilisé dans la phase organique liquide- en une quantité inférieure ou égale à celle correspondant à la stoechiométrie, de façon continue ou par lots, après quoi on maintient, le cas échéant sous agitation la dispersion obtenue à partir des phases aqueuse et liquide organique au moins jusqu'à la fin de la polycondensation.

4. Procédé de polycondensation selon la revendication 3, caractérisé en ce que l'addition de la phase aqueuse est effectuée de façon suffisamment lente pour que la quantité de phase aqueuse ajoutée soit à chaque fois immédiatement dispersée dans la phase organique.

5. Procédé selon la revendication 3 ou 4, caractérisé en que l'on ajoute la phase aqueuse à la phase liquide organique sur une durée comprise entre 1 et 15 minutes.

6. Procédé selon la revendication 1 ou 2, caractérisé en ce que la phase liquide organique et la phase aqueuse contenant le diphénolate en une quantité inférieure à celle correspondant à la stoechiométrie - par rapport à l'halogénure d'acide utilisé - sont mélangées en continu et en ce que ce mélange est envoyé subséquemment dans un ou plusieurs dispositif(s) de dispersion et/ou mélangeur(s) statique(s).

7. Procédé selon la revendication 1 ou 2, caractérisé en ce que la phase organique est envoyée à l'entrée d'un réacteur tubulaire, dans lequel est(sont) placé(s) successivement et selon le sens d'écoulement un ou plusieurs dispositif(s) de dispersion et/ou mélangeur(s) statique(s), et en ce que la phase aqueuse est alimentée en continu dans le réacteur en des sites d'alimentation placés successivement et de façon étagée selon le sens d'écoulement.

8. Polyester de bas poids moléculaire obtenu par le procédé selon l'une quelconque des revendications 1 à 7, caractérisé en ce que, dans le groupe Y, le radical bifonctionnel R a pour formule:

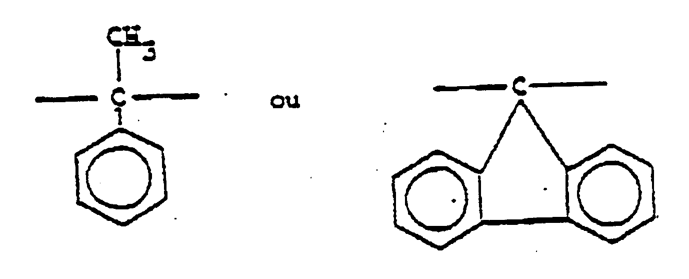

9. Polyester de bas poids moléculaire, caractérisé en ce que de 30 à 70% des motifs monomères présentent pour le groupe X la formule X₁ et de 70 à 30% des monomères présentent pour le groupe X la formule X₂.
